# EUROPEAN PATENT SPECIFICATION

(11) **EP 3 792 912 B1**
(45) Date of publication and mention of the grant of the patent: **03.11.2021**
(21) Application number: 19306096.9
(22) Date of filing: 11.09.2019
(51) Int. Cl.: G10L 15/08, G10L 15/32

(54) **IMPROVED WAKE-WORD RECOGNITION IN LOW-POWER DEVICES**
VERBESSERTE AUFWECKWORTERKENNUNG IN VORRICHTUNGEN MIT NIEDRIGER LEISTUNG
RECONNAISSANCE AMÉLIORÉE DE MOTS D'ÉVEIL DANS DES DISPOSITIFS DE FAIBLE PUISSANCE

(43) Date of publication of application: 17.03.2021
(73) Proprietor: Oracle International Corporation, Redwood Shores, California 94065 (US)
(72) Inventor: LE HUITOUZE, Serge, 35340 Ercé-près-Liffré (FR)
(74) Representative: Gill Jennings & Every LLP

(56) References cited:
- EP-A1- 3 282 445
- US-A1- 2019 251 967
- KEPUSKA VETON ET AL: "Improving Wake-Up-Word and General Speech Recognition Systems", 2017 IEEE 15TH INTL CONF ON DEPENDABLE, AUTONOMIC AND SECURE COMPUTING, 15TH INTL CONF ON PERVASIVE INTELLIGENCE AND COMPUTING, 3RD INTL CONF ON BIG DATA INTELLIGENCE AND COMPUTING AND CYBER SCIENCE AND TECHNOLOGY CONGRESS(DASC/PICOM/DATACOM/CYBERSCI, 6 November 2017 (2017-11-06), pages 318-321, XP033342601, DOI: 10.1109/DASC-PICOM-DATACOM-CYBERSCITEC.201 7.67 [retrieved on 2018-03-29]
- AHMAD ABDULKADER ET AL: "Multiple-Instance, Cascaded Classification for Keyword Spotting in Narrow-Band Audio", ARXIV.ORG, CORNELL UNIVERSITY LIBRARY, 201 OLIN LIBRARY CORNELL UNIVERSITY ITHACA, NY 14853, 21 November 2017 (2017-11-21), XP081301125,
- WU MINHUA ET AL: "Monophone-Based Background Modeling for Two-Stage On-Device Wake Word Detection", 2018 IEEE INTERNATIONAL CONFERENCE ON ACOUSTICS, SPEECH AND SIGNAL PROCESSING (ICASSP), IEEE, 15 April 2018 (2018-04-15), pages 5494-5498, XP033401542, DOI: 10.1109/ICASSP.2018.8462227 [retrieved on 2018-09-10]

## Description

### TECHNICAL FIELD

The present disclosure relates to dialog systems and, more particularly, to an improved method for recognizing a wake-word in a dialog system implemented, at least in part, on a device with a low-power element.

### BACKGROUND

An increasing number of devices now enable users to interact with the devices directly using voice or spoken speech. For example, a user can speak to such a device in a natural language where the user may ask a question or make a statement requesting some action to be performed. In response, the device performs the requested action or responds to the user's question using voice output. Since interacting directly using voice is a more natural and intuitive way for humans to communicate with their surroundings, the popularity of such speech-based systems is growing at an astronomical rate. To reduce the power consumption, spoken wake-words are used to wake-up a device from idle mode. The conference paper by Kepuska Veton et al, with the title "Improving Wake-Up-Word and General Speech Recognition Systems" presented at the 15th International Conference On Dependable, Autonomic and Secure Computing on the 6th November 2017, discloses wake-word recognition using two distinct recognizers for improved performance.

### BRIEF SUMMARY

The present disclosure relates to dialog systems and, more particularly, to a method of recognizing a wake-word in a dialog system that may be implemented, at least in part, on a low-power device. Certain embodiments of the dialog system include a listening device and a processing device. The listening device may include a wake-word recognition model, and the processing device may include a filtering model. An example embodiment shares the wake-word recognition model across both the listening device and the processing device.

The listening device may be configured to listen for audio input and to apply a wake-word recognition model to recognize whether the audio input includes a wake-word candidate. More specifically, an example of the wake-word recognition model takes audio input and outputs a score indicating the likelihood that the audio input includes the wake-word. If the score meets (e.g., equals or exceeds) a recognition threshold, then the audio input is deemed a wake-word candidate, and the listening device forwards the audio input to the processing device.

The processing device may be configured to determine whether audio input already classified as a wake-word candidate indeed includes the wake-word. An example of the processing device utilizes ensemble classification to combine the wake-word recognition model on the listening device with the filtering model on the processing device. More specifically, an example of the processing device outputs a second score indicating the likelihood that the audio input includes the wake-word, based on applying, to the audio input, a combination of the wake-word recognition model and the filtering model. If the second score meets a filtering threshold, then the dialog system may determine that the audio input includes the wake-word.

As a result of recognizing the wake-word, i.e., determining that the audio input includes the wake-word, the dialog system may cause the listening device to listen for speech input following the wake-word, and the dialog system may then process that speech input to provide a dialog between the user and the dialog system.

The foregoing, together with other features and embodiments will become more apparent upon referring to the following specification, claims, and accompanying drawings.

### BRIEF DESCRIPTION OF THE DRAWINGS

FIG. 1 is a diagram of an example dialog system that recognizes a wake-word;
FIG. 2 is a flow diagram of a method of recognizing a wake-word;
FIG. 3 is a simplified diagram of a distributed system;
FIG. 4 is a simplified block diagram of a cloud-based system environment in which wake-word recognition may be offered at least in part as a cloud services;
FIG. 5 is a block diagram of an example computer system that may be used to implement any of the example systems and methods;

### DETAILED DESCRIPTION

In the following description, for the purposes of explanation, specific details are set forth in order to provide a thorough understanding of certain embodiments. However, it will be apparent that various embodiments may be practiced without these specific details. The figures and description are not intended to be restrictive. The word "exemplary" is used herein to mean "serving as an example, instance, or illustration." Any embodiment or design described herein as "exemplary" is not necessarily to be construed as preferred or advantageous over other embodiments or designs.

A voice-enabled system that is capable of having a dialog with a user via voice inputs and voice outputs can come in various forms. For example, such a system may be provided as a stand-alone device, as a digital or virtual assistant, as a voice-capable service, and the like. In each of these forms, the system is capable of receiving voice or speech inputs, understanding the inputs, generating responses or taking actions responsive to the inputs, and outputting the responses using voice outputs. The dialog functionality in such a voice-enabled system is provided by a dialog system or infrastructure ("dialog system"). The dialog system is configured to receive voice or speech inputs, interpret the voice inputs, maintain a dialog, possibly perform or cause one or more actions to be performed based upon interpretations of the voice inputs, prepare appropriate responses, and output the responses to the user using voice or speech output.

The processing performed by a dialog system is implemented by a pipeline of components or subsystems, including:
(1) A wake-word detection (WD) subsystem;
(2) An automatic speech recognition (ASR) subsystem;
(3) A natural language understanding (NLU) subsystem, which includes a named entity recognizer (NER) subsystem and a semantic parser subsystem;
(4) A dialog manager (DM) subsystem;
(5) A natural language generator (NLG) subsystem; and
(6) A text-to-speech (TTS) subsystem.

The subsystems listed above may be implemented only in software (e.g., using code, program, or instructions executable by one or more processors or cores), in hardware, or in a combination of hardware and software. One or more of the subsystems may be combined into a single subsystem. Additionally or alternatively, in some implementations, the functions described herein as performed by a particular subsystem may be implemented by multiple subsystems.

The wake-word detection (WD) subsystem is configured to listen for and monitor a stream of audio input for input corresponding to a special sound or word (referred to as a wake-word). Upon detecting the wake-word, the WD subsystem is configured to activate the ASR subsystem. In certain implementations, a user may be provided the ability to activate or deactivate the WD subsystem. When activated (or operating in active mode), the WD subsystem is configured to continuously receive an audio input stream, and process the audio input stream to look for audio or voice input corresponding to the wake-word. When audio input corresponding to the wake-word is detected, the WD subsystem activates the ASR subsystem.

As described above, the WD activates the ASR subsystem. In some implementations of the voice-enabled system, mechanisms other than wake-words may be used to trigger or activate the ASR subsystem. For example, in some implementations, a push button on a device may be used to trigger the ASR subsystem processing without needing a wake-word. In such implementations, the WD subsystem may not be provided. When the push button is pressed or activated, the speech input received after the button activation is provided to the ASR subsystem for processing. In some implementations, the ASR subsystem may be activated upon receiving an input to be processed.

The ASR subsystem is configured to receive and monitor spoken voice input after a trigger or wake-up signal (e.g., the wake-up signal may be sent by the WD subsystem upon the detection of a wake-word in the speech input, the wake-up signal may be received upon the activation of a button, etc.) and to convert the voice input to text. As part of its processing, the ASR subsystem performs speech to text conversion. The spoken speech or voice input may be in a natural language form, and the ASR subsystem is configured to generate the corresponding natural language text. The text generated by the ASR subsystem is then fed to the NLU subsystem for further processing. The voice input received by the ASR subsystem may include one or more clauses, where each voice or speech clause is a unit of voice or speech input bounded by silence gaps. The ASR subsystem is configured to generate a text utterance for each spoken clause and feed the text utterances to the NLU subsystem for further processing.

The NLU subsystem receives texts generated by the ASR subsystem. The texts received by the NLU subsystem from the ASR subsystem may include text utterances corresponding to spoken clauses. The NLU subsystem translates each text utterance (or a series of text utterances) to its corresponding logical form. In certain implementations, the NLU subsystem includes a named entity recognizer (NER) subsystem and a semantic parser (SP) subsystem. The NER subsystem receives a text utterance as input, identifies named entities in the text utterance, and tags the text utterance with information related to the identified named entities. The tagged text utterances are then fed to the SP subsystem, which is configured to generate a logical form for each tagged text utterance (or for a series of tagged text utterances). The logical form generated for an utterance may identify one or more intents corresponding to the text utterance. An intent may, for example, identify an action that is requested to be performed. In addition to intents, a logical form generated for a text utterance may also identify slots (also referred to as parameters or arguments) for the identified intent. For example, if the determined intent is to order a pizza, the slots for the intent may correspond to the type of pizza, the size of the pizza, and the like. The logical forms generated by the NLU subsystem are then fed to the DM subsystem for further processing.

The DM subsystem is configured to manage a dialog with the user based upon logical forms received from the NLU subsystem. As part of the dialog management, the DM subsystem is configured to track dialog states, initiate the execution of or itself execute one of more actions or tasks, and determine how to interact with the user. These actions may include, for example, querying one or more databases, producing execution results, and other actions. For example, the DM subsystem is configured to interpret the intents identified in the logical forms received from the NLU subsystem. Based upon the interpretations, the DM subsystem may initiate one or more actions that it interprets as being requested by the voice inputs provided by the user. In certain implementations, the DM subsystem performs dialog states tracking based upon current and past voice inputs and based upon a set of rules (e.g., dialog policies) configured for the DM subsystem. These rules may specify the different dialog states, conditions for transitions between states, actions to be performed when in a particular state, and the like. These rules may be domain specific. The DM subsystem also generates responses to be communicated back to the user involved in the dialog. These responses may be based upon actions initiated by the DM subsystem and their results. The responses generated by the DM subsystem are fed to the NLG subsystem for further processing.

The NLG subsystem is configured to generate natural language texts corresponding to the responses generated by the DM subsystem. The texts may be generated in a form that enables them to be converted to speech by the TTS subsystem. The TTS subsystem receives the texts from the NLG subsystem and converts each of them to speech or voice audio, which may then be output to the user via an audio or speech output component of the dialog system.

As described above, the various subsystems of the dialog system working in cooperation provide the functionality that enables the dialog system to receive speech inputs and respond using speech outputs and maintain a dialog with a user using natural language speech. The various subsystems described above may be implemented using a single computer system or using multiple computer systems working cooperatively. For example, for a device implementing the voice-enabled system, the subsystems of the dialog system described above may be implemented entirely on the device with which the user interacts. In some other implementations, some components or subsystems of the dialog system may be implemented on the device with which the user interacts, while other components may be implemented remotely from the device, possibly on some other computing devices, platforms, or servers.

Given the complexities of a spoken language, the processing performed by dialog systems is complicated, requiring substantial compute, memory, and power resources. This poses several technical challenges when the dialog system or portions of the dialog system have to be implemented on devices with limited compute, memory, and power resources. Embodiments described herein are incorporated into the wake-word detection system of a dialog system and are particularly useful when the dialog system runs, at least in part, on a low-power device.

In many cases, a dialog system is integrated, at least in part, in a low-power device, such as a personal assistant (PA) device. Generally, it is desirable to conserve power in the low-power device, for instance, because the low-power device is battery-powered or is typically always-on such that long-term power use becomes a concern. The low-power device behaves as an interface for the user, such that the user speaks the wake-word to the low-power device, which plays a role in recognizing the wake-word. Before a dialog system can process speech input, the dialog system must recognize the wake-word, which tells the dialog system to listen for and process the speech input that follows the wake-word.

More specifically, the low-power device typically runs an ASR model, also referred to as a keyword model, which is a machine-learning (ML) model configured to map audio input to a score indicating the likelihood that the audio input includes the wake-word. In other words, this ASR model attempts to recognize the wake-word. However, due to size limitations as well as power limitations on the low-power device, the ASR model is typically small (e.g., compressed). Due to the small size of the ASR model, its accuracy is limited. To address this, typically a threshold is applied to the output scores, and audio inputs assigned scores that meet such threshold are deemed to be wake-word candidates. A second ML model on a second device analyzes the wake-word candidates to determine which wake-word candidates indeed include the wake-word. When the second ML model determines that the wake-word has indeed been used, the low-power device listens for speech input, which the dialog system processes to provide a dialog with a user.

Embodiments described herein provide an improved method for recognizing a wake-word, which enables a dialog system to listen for speech input and that follows the wake-word, thus, process the speech input. Recognition of the wake-word is an important feature of a dialog system because a false positive leads the dialog system to listen when no query is being provided in the form of speech input from a user, which wastes computing power and potentially impacts privacy when people proximate to the dialog system are having a private conversation, and a false negative leads to the dialog system failing to process speech input when such processing is expected by a user. Existing methodologies of using two distinct ML models, more specifically, a wake-word recognition model that recognizes a wake-word and a filtering model that filters out false positives from the detections of the wake-word recognition model, do not take full advantage of these ML models and, as a result, do not do the best job they can do.

Embodiments described herein combine the wake-word recognition model and the filtering model to better leverage the intelligence in these two models. More specifically, dialog systems described herein share the wake-word recognition model across a listening device and a processing device. After application of the wake-word recognition model to make detections of wake-word candidates, ensemble classificatior is utilized to combine the wake-word recognition model with the filtering model. The resulting ML model, which is a combination of the wake-word recognition model and the filtering model, is likely more accurate than the filtering model alone. As a result, the wake-word recognition model can remain small while improving the overall accuracy of wake-word recognition, specifically at the filtering stage.

The following non-limiting example is provided for illustrative purposes only: Suppose a dialog system includes a PA device, acting as a listening device, and a smartphone, acting as a processing device, where the PA device and the smartphone are in communication with each other over a local wireless network (e.g., utilizing WiFi). The PA device runs on a rechargeable battery and has relatively low storage space, and thus, it is desirable for an ML model resident on the PA device to be small (e.g., compressed). As a result, the accuracy is not expected to be high. The ML model on the PA device acts as a wake-word recognition model, which detects wake-word candidates. In this example, the PA device detects audio input and, using the wake-word recognition model, determines that the audio input is a wake-word candidate. As such, the PA device transmits the audio input to the smartphone for filtering.

When the smartphone receives from the PA device an indication that a particular audio input has been recognized as the wake-word, the smartphone applies ensemble classification to filter out false positives utilizing both the wake-word recognition model on the PA device and a filtering model on the smartphone itself. Thus, the smartphone remains in communication with the PA device when determining whether the audio input includes the wake-word. If the smartphone determines that the audio input does indeed include the wake-word, then the PA device listens for speech input. However, if the smartphone determines that the audio input does not include the wake-word, thus filtering out the audio input as a false positive, the PA device need not listen for speech input but rather may enter, or return to, a standby state.

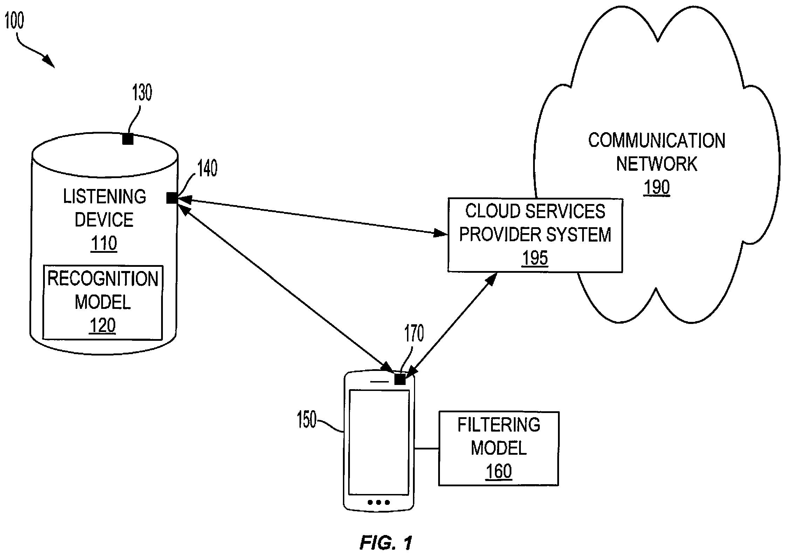

FIG. 1 depicts a diagram of an example dialog system 100 that recognizes a wake-word, according to certain embodiments. As shown in FIG. 1, the dialog system 100 includes a listening device 110 and a processing device 150. The listening device 110 detects audio input and executes a wake-word recognition model 120 installed on the listening device 110 to determine whether the audio input is a wake-word candidate or, more specifically, is sufficiently likely to include the wake-word; the processing device 150 executes ensemble classification utilizing the wake-word recognition model 120 on the listening device 110 as well as a filtering model 160 on the processing device 150 to determine whether each audio input identified as a wake-word candidate includes the wake-word. The dialog system 100 may further include a cloud services provider system 195 operating in a cloud, where one or both of the listening device 110 and the processing device 150 are in communication with the cloud services provider system 195 by way of a communication network 190, such as the internet. For instance, after recognition of the wake-word, the listening device 110 may detect speech input following the wake-word, and the dialog system 100 may process that speech input at the processing device 150 or at the cloud services provider system 195.

The listening device 110 may be a computing device or portion thereof. For instance, the listening device 110 may be or may include a digital signal processor (DSP), which is a specialized device for processing analog signals. A DSP may be particularly suited to process spoken words of a user. An example listening device 110 is dedicated to the dialog system 100 in that the listening device 110 has few or no tasks outside of the dialog system 100. For example, and not by way of limitation, the listening device 110 may be a PA device dedicated to participating in the dialog system 100. Alternatively, however, the listening device 110 may be a smartphone, a tablet, or some other computing device capable of storing and executing the wake-word recognition model 120 as described herein.

In some implementations, the listening device 110 includes a microphone 130 or other sensor for detecting audio input, a wake-word recognition model 120, and a communication device 140. The microphone 130 or other sensor may detect audio input, which the wake-word recognition model 120 may use as input. The communication device 140 of the listening device 110 may be a WiFi device, Bluetooth device, or other communication device 140 enabling the listening device 110 to communicate with the processing device 150 over a data network.

The wake-word recognition model 120 is an ML model configured to map an audio input to an indication of whether the audio input includes a predetermined wake-word. The wake-word recognition model 120 may be, for example, a neural network, random forest, decision tree, or other ML model. The wake-word recognition model 120 may have been previously trained with training data including a set of training tuples, each tuple including audio input and an indication of whether the wake-word is actually included in the audio input. As such, the wake-word recognition model 120 is configured to map audio input to an indication of whether the audio input includes the wake-word. For example, and not by way of limitation, the wake-word recognition model 120 may output a score (e.g., a probability) indicating the likelihood that the audio input includes the wake-word. The listening device 110 may maintain a predetermined recognition threshold, such that an audio input that is mapped to a score meeting (e.g., equaling or exceeding) the recognition threshold may be deemed by the listening device 110 to be a wake-word candidate. Due to storage or power limitations, an example of the wake-word recognition model 120 is small and potentially compressed, and as such, the wake-word recognition model 120 may have lower accuracy than desired. The recognition threshold may be set to a relatively low value (e.g., 70%) to ensure that each audio input including the wake-word is identified as a wake-word candidate.

The listening device 110 has a standby mode, also referred to as a low-power mode, in addition to an active mode. In the active mode, the listening device 110 may be configured to perform its full range of tasks, including, for instance listening for speech input or participating in processing speech input. In contrast, in standby mode, the listening device 110 may be limited to a subset of tasks that it has the capability to perform one or more integrated hardware devices of the listening device 110, such as the communication device 140, are switched off or not in use when the listening device 110 is in standby mode. In some embodiments, the listening device is in standby mode before detecting an audio input. An example of the listening device 110 switches into active mode responsive to detecting an audio input. While in the active mode, the listening device 110 may apply the wake-word recognition model 120 and, if the audio input is deemed to include a wake-word candidate, may transmit the audio input to the processing device 150. In some embodiments, the listening device 110 remains in active mode while the processing device 150 determines whether the audio input includes a wake-word, thus enabling the listening device 110 to share the wake-word recognition model 120 with the processing device 150 through communications between the listening device 110 and the processing device 150, to enable ensemble classification as described herein.

The processing device 150 may be a computing device or portion thereof. The processing device 150 is or includes an application processor, which is a specialized microprocessor. Additionally or alternatively, all or a portion of the processing device 150 may operate in a cloud outside a local area network of the listening device 110. The processing device 150 may be distributed across one or more nodes, where each node is a computing device or portion thereof. However, the processing device 150 and the listening device 110 share a local area network to enable fast recognition of the wake-word when utilizing ensemble classification with ML models across both the listening device 110 and the processing device 150.

For example, and not by way of limitation, the processing device 150 may be a smartphone, a tablet, or a notebook or desktop computer. An example processing device 150 has the filtering model 160 installed as part of an application associated with the dialog system 100, and further, the example processing device 150 performs various tasks of which participation in the dialog system 100 is only a subset. It will be understood, however, that the processing device 150 may be a dedicated device.

The processing device 150 includes a filtering model 160 and a communication device 170. The communication device 170 of the processing device 150 may be a WiFi device, Bluetooth device, or other communication device 170 enabling the processing device 150 to communicate with the listening device 110 over a data network.

The filtering model 160 is an ML model configured to map audio input to an indication of whether the audio input includes a predetermined wake-word. The filtering model 160 may be, for example, a neural network, random forest, decision tree, or other ML model. Although both the wake-word recognition model 120 and the filtering model 160 may map audio input to an indication of whether the audio input is a wake-word. The filtering model 160 has been trained to map audio inputs that are wake-word candidates to indications of whether such wake-word candidates actually include the wake-word. In other words, the filtering model 160 may be trained based on audio input with a high likelihood of including the wake-word. For instance, an example of the filtering model 160 has been trained with a set of training tuples, with each training tuple including audio input that is deemed a wake-word candidate and an indication of whether the audio input actually includes the wake-word. Thus, the filtering model 160 may be configured to precisely filter out false positives from among wake-word candidates. Further, the processing device 150 does not have the same storage and power constraints as does the listening device, and as such, the filtering model 160 may be larger, which can enable greater accuracy.

However, for the act of filtering, a combination of the wake-word recognition model 120 and the filtering model 160 may perform better than the filtering model 160 alone. Thus, the processing device 150 utilizes ensemble classification, with both the wake-word recognition model 120 resident on the listening device 110 and the filtering model 160 resident on the processing device 150 itself. Generally, ensemble classification, also referred to as ensemble learning, uses multiple ML models to obtain better predictive performance than could be obtained from any one of such constituent ML models individually. Ensemble classification combines two or more ML models into one predictive model to potentially decrease variance or bias and to improve predictions. To implement the ensemble classification, the processing device 150 may remain in communication with the listening device 110 while evaluating whether an audio input includes the wake-word.

One of skill in the art will understand how to combine the wake-word recognition model 120 and the filtering model 160 to provide ensemble classification. For example, and not by way of limitation, the dialog system 100 generates an ensemble prediction utilizing one or more of bagging, boosting, or stacking applied to the wake-word recognition model 120 and the filtering model 160, and more specifically, the processing device 150 may perform this bagging, boosting, or stacking to generate an ensemble prediction of whether an audio input includes the wake-word. In some implementations, the ensemble prediction is a second score (e.g., a probability) indicating the likelihood that the audio input includes the wake-word, and the processing device 150 determines that the audio input includes the wake-word if the second score meets (e.g., equals or exceeds) a filtering threshold.

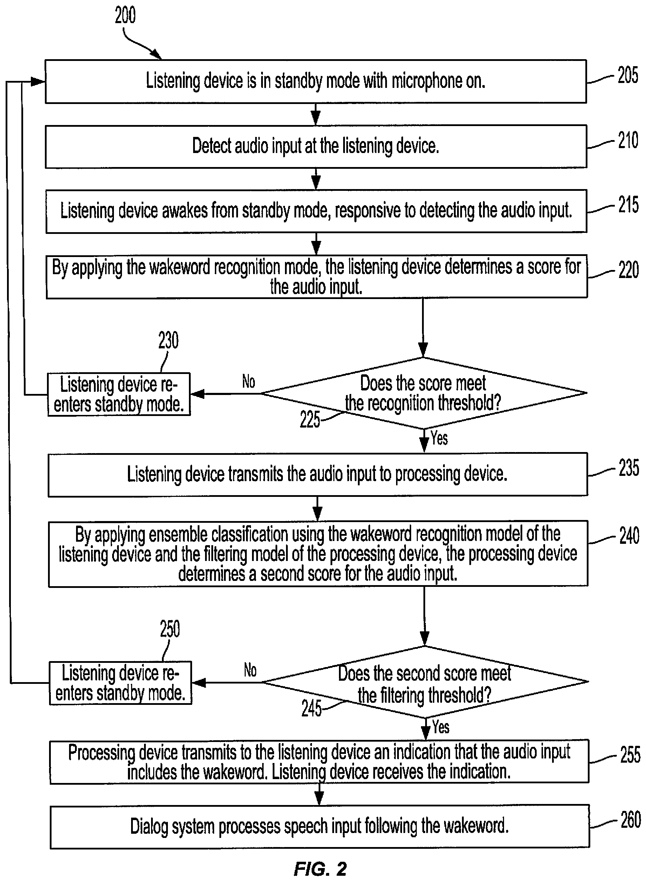

FIG. 2 depicts a flow diagram of a method 200 of recognizing a wake-word, according to certain embodiments. In some implementations, prior to the beginning of the method 200, a wake-word is predetermined and known to both the wake-word recognition model 120 and the filtering model 160. For example, and not by way of limitation, the wake-word may be "wake up" or "hey there." Further, the wake-word recognition model 120 and the filtering model 160 have both been trained, and the processing device 150 maintains an indication of how to combine the wake-word recognition model 120 and the filtering model 160 to make an ensemble prediction. In some implementations, the listening device 110 maintains a recognition threshold to enable the listening device 110 to select wake-word candidates based on output from the wake-word recognition model 120. Analogously, the processing device 150 may maintain a filtering threshold, which the listening device 110 may use to select audio inputs as wake-word candidates, based on output from the filtering model 160.

At block 205, in some implementations, the listening device 110 is in standby mode. In standby mode, the microphone may remain on to detect audio. At block 210 of the method 200, the listening device 110 detects audio input. For instance, in some embodiments, the microphone 130 of the listening device 110 detects the audio input, which may be someone speaking proximate to the listening device 110. In some implementations, at block 215, responsive to detecting the audio input, the listening device 110 awakes from standby mode, thus entering active mode. However, it will be understood that, if an implementation of the listening device 110 does not have a standby mode, then block 205 and block 215 may be skipped.

At block 220, the listening device 110 determines a score for the audio input by applying the wake-word recognition model 120 to the audio input. As discussed above, the wake-word recognition model 120 has already been trained to recognize the wake-word and, as such, to output such a score based on audio input.

At decision block 225, the listening device 110 determines whether the score meets the recognition threshold. As described above, the accuracy level of the wake-word recognition model 120 may not be as high as desired for final recognition of the wake-word, and thus, the recognition threshold may be set relatively low so as to ensure that audio inputs representing instances of the wake-word are selected as wake-word candidates. However, a relatively low recognition threshold is also likely to capture false positives. If the score does not meet the recognition threshold, then the audio input may be deemed not be a wake-word candidate, and thus, the listening device 110 may deem the audio input not to include the wake-word. In that case, the method 200 proceeds to block 230, where the listening device 110 re-enters standby mode and, at block 205, awaits further audio input that may include the wake-word. However, if the score meets the recognition threshold, then the audio input may be deemed to be a wake-word candidate. In that case, the method 200 may proceed from decision block 225 to block 235.

In cases in which the score meets the recognition threshold, at block 235, the listening device 110 utilizes its communication device 140 to transmit the audio input to the processing device 150 over a data network, and the processing device 150 utilizes its own communication device 170 to receive the audio input from the listening device 110. For example, and not by way of limitation, the listening device 110 and the processing device 150 may communicate via WiFi, Bluetooth, or other mechanism. In some implementations, the listening device 110 and the processing device 150 share a local area network, and communications between the listening device 110 and the processing device 150 occur over the local area network that is shared.

At block 240, the processing device 150 determines a second score as an ensemble prediction by applying, to the audio input that is a wake-word candidate, ensemble classification using a combination of the wake-word recognition model 120 and the filtering model 160. More specifically, an example of the processing device 150 utilizes a technique of bagging, boosting, or stacking to determine the second score based on both the wake-word recognition model 120 and the filtering model 160. Generally, the ensemble prediction is expected to be more accurate than using the filtering model 160 alone.

At decision block 245, the dialog system 100, such as the processing device 150, determines whether the audio input includes the wake-word. More specifically, for instance, the processing device 150 may determine whether the second score meets the filtering threshold. If the second score does not meet the filtering threshold, then the method 200 may proceed to block 250, where the listening device 110 re-enters standby mode and, at block 205, awaits further audio input that may include the wake-word. However, if it is determined that the second score meets the filtering threshold, then the method 200 proceeds from decision block 245 to block 255.

At block 255, the processing device 150 transmits to the listening device 110 an indication that the audio input includes the wake-word. In that case, at block 260, the dialog system 100 processes further speech input following the audio input deemed to include wake-word. For instance, the listening device 110 continues listening to capture speech input following the wake-word, and the dialog system 100 processes that speech input to provide a dialog with a user. Thus, in some embodiments, accurate recognition of the wake-word, as described herein, is a preliminary operation to processing speech input to provide a dialog. It will be understood that the method 200 of FIG. 2 may be repeated each time the listening device 110 detects audio input that might include the wake-word (e.g., each time the listening device 110 detects audio input while in standby mode).

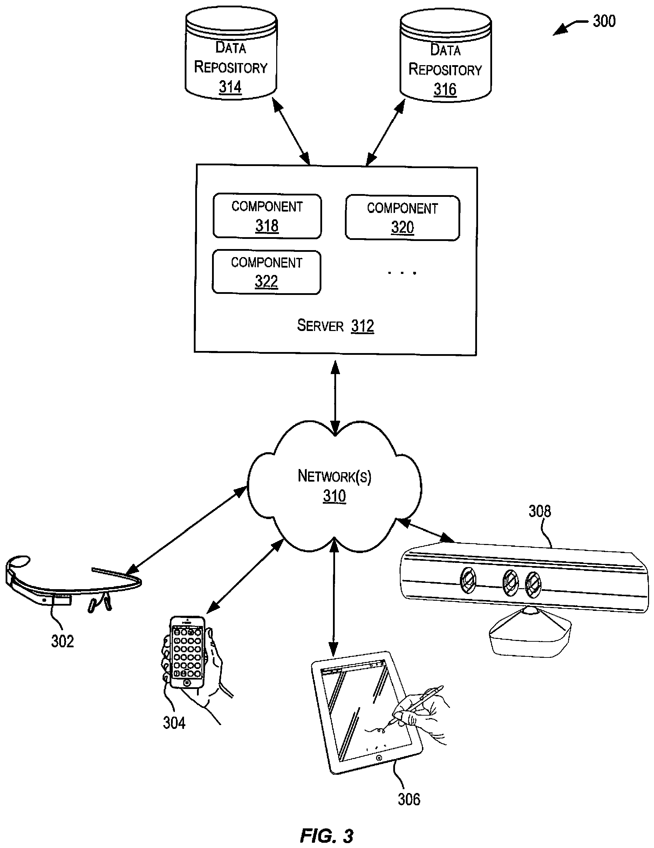

FIG. 3 is a simplified diagram of a distributed system 300. In the illustrated implementation, distributed system 300 includes one or more client computing devices 302, 304, 306, and 308, coupled to a server 312 via one or more communication networks 310. Clients computing devices 302, 304, 306, and 308 may be configured to execute one or more applications.

Server 312 may be adapted to run one or more services or software applications that enable the functionality of the processing device 150 or the dialog system 100 described herein. In other words, for instance, server 312 may act as the processing device 150, or server 312 may be in communication with one or both of the listening device 110 and the processing device 150 to receive speech input for processing, where server 312 processes speech input as part of the dialog system 100.

Server 312 may also provide other services or software applications that can include non-virtual and virtual environments. These services may be offered as web-based or cloud services, such as under a Software as a Service (SaaS) model to the users of client computing devices 302, 304, 306, and/or 308. Users operating client computing devices 302, 304, 306, and/or 308 may in turn utilize one or more client applications to interact with server 312 to utilize the services provided by these components. More specifically, for instance, client computing devices 302, 304, 306, and/or 308 may be various listening devices 110 or processing devices 150 in communication with server 312 to provide speech input to server 312 and, in turn, to receive a response to the speech input from server 312. Upon receiving such response, the listening device 110 may provide the response to a user in audio form, thus enabling a conversation to take place between the user and the dialog system 100.

In the configuration depicted in FIG. 3, server 312 may include one or more components 318, 320 and 322 that implement the functions performed by server 312. These components may include software components that may be executed by one or more processors, hardware components, or combinations thereof. It should be appreciated that various different system configurations are possible, which may be different from distributed system 300. The implementation shown in FIG. 3 is thus one example of a distributed system.

Users may use client computing devices 302, 304, 306, and/or 308 to interact with aspects of the dialog system 100 provided by server 312 in accordance with the teachings of this disclosure. A client device may provide an interface (e.g., a speech interface) that enables a user of the client device to interact with the client device. The client device may also output information to the user via this interface. Although FIG. 3 depicts only four client computing devices, any number of client computing devices may be supported.

The client devices may include various types of computing systems such as PA devices, portable handheld devices, general purpose computers such as personal computers and laptops, workstation computers, wearable devices, gaming systems, thin clients, various messaging devices, sensors or other sensing devices, and the like. These computing devices may run various types and versions of software applications and operating systems (e.g., Microsoft Windows®, Apple Macintosh®, UNIX® or UNIX-like operating systems, Linux or Linux-like operating systems such as Google Chrome™ OS) including various mobile operating systems (e.g., Microsoft Windows Mobile®, iOS®, Windows Phone®, Android™, BlackBerry®, Palm OS®). Portable handheld devices may include cellular phones, smartphones, (e.g., an iPhone®), tablets (e.g., iPad®), personal digital assistants (PDAs), and the like. Wearable devices may include Google Glass® head mounted display, and other devices. Gaming systems may include various handheld gaming devices, Internet-enabled gaming devices (e.g., a Microsoft Xbox® gaming console with or without a Kinect® gesture input device, Sony PlayStation® system, various gaming systems provided by Nintendo®, and others), and the like. The client devices may be capable of executing various different applications such as various Internet-related apps, communication applications (e.g., E-mail applications, short message service (SMS) applications) and may use various communication protocols.

Network(s) 310 may be any type of network familiar to those skilled in the art that can support data communications using any of a variety of available protocols, including without limitation TCP/IP (transmission control protocol/Internet protocol), SNA (systems network architecture), IPX (Internet packet exchange), AppleTalk®, and the like. Merely by way of example, network(s) 310 can be a local area network (LAN), networks based on Ethernet, Token-Ring, a wide-area network (WAN), the Internet, a virtual network, a virtual private network (VPN), an intranet, an extranet, a public switched telephone network (PSTN), an infrared network, a wireless network (e.g., a network operating under any of the Institute of Electrical and Electronics (IEEE) 1002.11 suite of protocols, Bluetooth®, and/or any other wireless protocol), and/or any combination of these and/or other networks.

Server 312 may be composed of one or more general purpose computers, specialized server computers (including, by way of example, PC (personal computer) servers, UNIX® servers, mid-range servers, mainframe computers, rack-mounted servers, etc.), server farms, server clusters, or any other appropriate arrangement and/or combination. Server 312 can include one or more virtual machines running virtual operating systems, or other computing architectures involving virtualization such as one or more flexible pools of logical storage devices that can be virtualized to maintain virtual storage devices for the server. In various embodiments, server 312 may be adapted to run one or more services or software applications that provide the functionality described in the foregoing disclosure.

The computing systems in server 312 may run one or more operating systems including any of those discussed above, as well as any commercially available server operating system. Server 312 may also run any of a variety of additional server applications and/or mid-tier applications, including HTTP (hypertext transport protocol) servers, FTP (file transfer protocol) servers, CGI (common gateway interface) servers, JAVA® servers, database servers, and the like. Exemplary database servers include without limitation those commercially available from Oracle®, Microsoft®, Sybase®, IBM® (International Business Machines), and the like.

In some implementations, server 312 may include one or more applications to analyze and consolidate data feeds and/or event updates received from users of client computing devices 302, 304, 306, and 308. As an example, data feeds and/or event updates may include, but are not limited to, Twitter® feeds, Facebook® updates or real-time updates received from one or more third party information sources and continuous data streams, which may include real-time events related to sensor data applications, financial tickers, network performance measuring tools (e.g., network monitoring and traffic management applications), clickstream analysis tools, automobile traffic monitoring, and the like. Server 312 may also include one or more applications to display the data feeds and/or real-time events via one or more display devices of client computing devices 302, 304, 306, and 308.

Distributed system 300 may also include one or more data repositories 314, 316. These data repositories may be used to store data and other information in certain embodiments. For example, one or more of data repositories 314, 316 may be used to store data required to operate the wake-word recognition model 120, the filtering model 160, or the ensemble classification combining the wake-word recognition model and the filtering model 160. Data repositories 314, 316 may reside in a variety of locations. For example, a data repository used by server 312 may be local to server 312 or may be remote from server 312 and in communication with server 312 via a network-based or dedicated connection. Data repositories 314, 316 may be of different types. In certain implementations, a data repository used by server 312 may be a database, for example, a relational database, such as databases provided by Oracle Corporation@ and other vendors. One or more of these databases may be adapted to enable storage, update, and retrieval of data to and from the database in response to SQL-formatted commands.

In certain implementations, one or more of data repositories 314, 316 may also be used by applications to store application data. The data repositories used by applications may be of different types such as, for example, a key-value store repository, an object store repository, or a general storage repository supported by a file system.

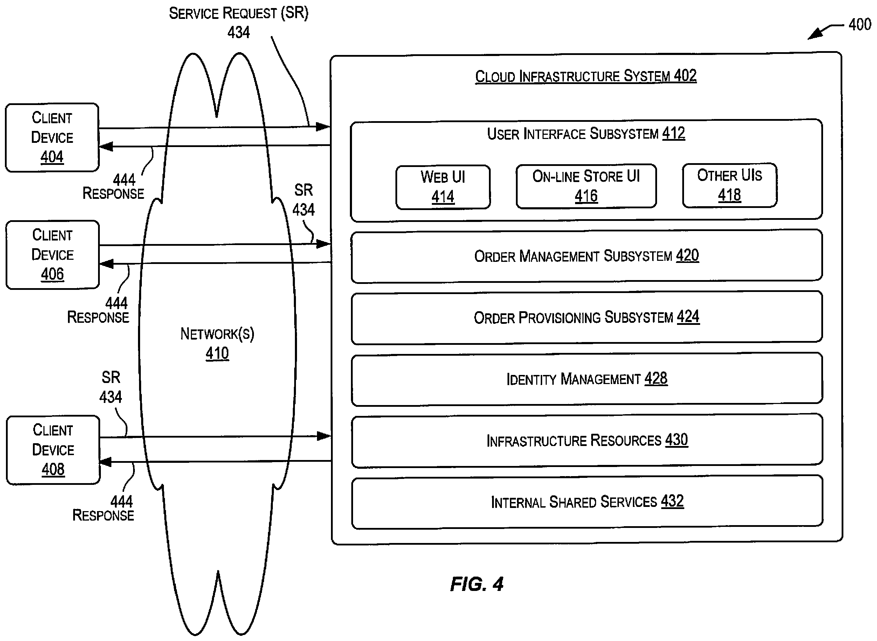

In certain implementations, all or a portion of determining that an audio input includes a wake-word, as described in this disclosure, may be offered as services via a cloud environment. FIG. 4 is a simplified block diagram of a cloud-based system environment in which wake-word recognition (i.e., the determination of whether an audio input includes a wake-word) may be offered at least in part as a cloud service, in accordance with certain embodiments. In the embodiment depicted in FIG. 4, cloud infrastructure system 402 may provide one or more cloud services that may be requested by users using one or more client computing devices 404, 406, and 408. Cloud infrastructure system 402 may comprise one or more computers and/or servers that may include those described above for server 312. The computers in cloud infrastructure system 402 may be organized as general purpose computers, specialized server computers, server farms, server clusters, or any other appropriate arrangement and/or combination.

Network(s) 410 may facilitate communication and exchange of data between client computing devices 404, 406, and 408 and cloud infrastructure system 402. Network(s) 410 may include one or more networks. The networks may be of the same or different types. Network(s) 410 may support one or more communication protocols, including wired and/or wireless protocols, for facilitating the communications.

The implementation depicted in FIG. 4 is only one example of a cloud infrastructure system and is not intended to be limiting. It should be appreciated that, in some other implementations, cloud infrastructure system 402 may have more or fewer components than those depicted in FIG. 4, may combine two or more components, or may have a different configuration or arrangement of components. For example, although FIG. 4 depicts three client computing devices, any number of client computing devices may be supported in alternative implementations.

The term cloud service is generally used to refer to a service that is made available to users on demand and via a communication network such as the Internet by systems (e.g., cloud infrastructure system 402) of a service provider. Typically, in a public cloud environment, servers and systems that make up the cloud service provider's system are different from the customer's own on-premises servers and systems. The cloud service provider's systems are managed by the cloud service provider. Customers can thus avail themselves of cloud services provided by a cloud service provider without having to purchase separate licenses, support, or hardware and software resources for the services. For example, a cloud service provider's system may host an application, and a user may, via the Internet, on demand, order and use the application without the user having to buy infrastructure resources for executing the application. Cloud services are designed to provide easy, scalable access to applications, resources and services. Several providers offer cloud services. For example, several cloud services are offered by Oracle Corporation@ of Redwood Shores, California, such as middleware services, database services, Java cloud services, and others.

In certain implementations, cloud infrastructure system 402 may provide one or more cloud services using different models such as under a Software as a Service (SaaS) model, a Platform as a Service (PaaS) model, an Infrastructure as a Service (IaaS) model, and others, including hybrid service models. Cloud infrastructure system 402 may include a suite of applications, middleware, databases, and other resources that enable provision of the various cloud services.

A SaaS model enables an application or software to be delivered to a customer over a communication network like the Internet, as a service, without the customer having to buy the hardware or software for the underlying application. For example, a SaaS model may be used to provide customers access to on-demand applications that are hosted by cloud infrastructure system 402. Examples of SaaS services provided by Oracle Corporation@ include, without limitation, various services for human resources/capital management, customer relationship management (CRM), enterprise resource planning (ERP), supply chain management (SCM), enterprise performance management (EPM), analytics services, social applications, and others.

An IaaS model is generally used to provide infrastructure resources (e.g., servers, storage, hardware and networking resources) to a customer as a cloud service to provide elastic compute and storage capabilities. Various IaaS services are provided by Oracle Corporation@.

A PaaS model is generally used to provide, as a service, platform and environment resources that enable customers to develop, run, and manage applications and services without the customer having to procure, build, or maintain such resources. Examples of PaaS services provided by Oracle Corporation@ include, without limitation, Oracle Java Cloud Service (JCS), Oracle Database Cloud Service (DBCS), data management cloud service, various application development solutions services, and others.

Cloud services are generally provided on an on-demand self-service basis, subscription-based, elastically scalable, reliable, highly available, and secure manner. For example, a customer, via a subscription order, may order one or more services provided by cloud infrastructure system 402. Cloud infrastructure system 402 then performs processing to provide the services requested in the customer's subscription order. For example, a customer may subscribe to information services or other services provided by the dialog system 100 in conversational form. Cloud infrastructure system 402 may be configured to provide one or even multiple cloud services.

Cloud infrastructure system 402 may provide the cloud services via different deployment models. In a public cloud model, cloud infrastructure system 402 may be owned by a third party cloud services provider and the cloud services are offered to any general public customer, where the customer can be an individual or an enterprise. In certain other embodiments, under a private cloud model, cloud infrastructure system 402 may be operated within an organization (e.g., within an enterprise organization) and services provided to customers that are within the organization. For example, the customers may be various departments of an enterprise such as the Human Resources department, the Payroll department, etc. or even individuals within the enterprise. In certain other embodiments, under a community cloud model, the cloud infrastructure system 402 and the services provided may be shared by several organizations in a related community. Various other models such as hybrids of the above mentioned models may also be used.

Client computing devices 404, 406, and 408 may be of different types (such as client computing devices 302, 304, 306, and 308 depicted in FIG. 3) and may be capable of operating one or more client applications. A user may use a client computing device to interact with cloud infrastructure system 402, such as to request a service provided by cloud infrastructure system 402. An attacker may use a client device to send malicious requests.

In some implementations, the processing performed by cloud infrastructure system 402 may involve big data analysis. This analysis may involve using, analyzing, and manipulating large data sets to detect and visualize various trends, behaviors, relationships, etc. within the data. This analysis may be performed by one or more processors, possibly processing the data in parallel, performing simulations using the data, and the like. For example, big data analysis may be performed by cloud infrastructure system 402 for providing wake-word recognition as described herein or processing speech input of the dialog system 100. The data used for this analysis may include structured data (e.g., data stored in a database or structured according to a structured model) and/or unstructured data (e.g., data blobs (binary large objects)).

As depicted in the implementation in FIG. 4, cloud infrastructure system 402 may include infrastructure resources 430 that are utilized for facilitating the provision of various cloud services offered by cloud infrastructure system 402. Infrastructure resources 430 may include, for example, processing resources, storage or memory resources, networking resources, and the like.

In certain implementations, to facilitate efficient provisioning of these resources for supporting the various cloud services provided by cloud infrastructure system 402 for different customers, the infrastructure resources 430 may be bundled into sets of resources or resource modules (also referred to as "pods"). Each resource module or pod may comprise a pre-integrated and optimized combination of resources of one or more types. In certain embodiments, different pods may be pre-provisioned for different types of cloud services. For example, a first set of pods may be provisioned for a database service, a second set of pods, which may include a different combination of resources than a pod in the first set of pods, may be provisioned for Java service, and the like. For some services, the resources allocated for provisioning the services may be shared between the services.

Cloud infrastructure system 402 may itself internally use services 432 that are shared by different components of cloud infrastructure system 402 and that facilitate the provisioning of services by cloud infrastructure system 402. These internal shared services may include, without limitation, a security and identity service, an integration service, an enterprise repository service, an enterprise manager service, a virus scanning and white list service, a high availability, backup and recovery service, service for enabling cloud support, an email service, a notification service, a file transfer service, and the like.

Cloud infrastructure system 402 may comprise multiple subsystems. These subsystems may be implemented in software, or hardware, or combinations thereof. As depicted in FIG. 4, the subsystems may include a user interface subsystem 412 that enables users or customers of cloud infrastructure system 402 to interact with cloud infrastructure system 402. User interface subsystem 412 may include various different interfaces such as a web interface 414, an online store interface 416 where cloud services provided by cloud infrastructure system 402 are advertised and are purchasable by a consumer, and other interfaces 418. For example, a customer may, using a client device, request (service request 434) one or more services provided by cloud infrastructure system 402 using one or more of interfaces 414, 416, and 418. For example, a customer may access the online store, browse cloud services offered by cloud infrastructure system 402, and place a subscription order for one or more services offered by cloud infrastructure system 402 that the customer wishes to subscribe to. The service request may include information identifying the customer and one or more services that the customer desires to subscribe to.

In certain implementations, as e.g. depicted in FIG. 4, cloud infrastructure system 402 may comprise an order management subsystem (OMS) 420 that is configured to process the new order. As part of this processing, OMS 420 may be configured to: create an account for the customer, if not done already; receive billing and/or accounting information from the customer that is to be used for billing the customer for providing the requested service to the customer; verify the customer information; upon verification, book the order for the customer; and orchestrate various workflows to prepare the order for provisioning.

Once properly validated, OMS 420 may then invoke an order provisioning subsystem (OPS) 424 that is configured to provision resources for the order including processing, memory, and networking resources. The provisioning may include allocating resources for the order and configuring the resources to facilitate the service requested by the customer order. The manner in which resources are provisioned for an order and the type of the provisioned resources may depend upon the type of cloud service that has been ordered by the customer. For example, according to one workflow, OPS 424 may be configured to determine the particular cloud service being requested and identify a number of pods that may have been pre-configured for that particular cloud service. The number of pods that are allocated for an order may depend upon the size/amount/level/scope of the requested service. For example, the number of pods to be allocated may be determined based upon the number of users to be supported by the service, the duration of time for which the service is being requested, and the like. The allocated pods may then be customized for the particular requesting customer for providing the requested service.

Cloud infrastructure system 402 may send a response or notification 444 to the requesting customer to indicate when the requested service is now ready for use. In some instances, information (e.g., a link) may be sent to the customer that enables the customer to start using and availing the benefits of the requested services.

Cloud infrastructure system 402 may provide services to multiple customers. For each customer, cloud infrastructure system 402 is responsible for managing information related to one or more subscription orders received from the customer, maintaining customer data related to the orders, and providing the requested services to the customer. Cloud infrastructure system 402 may also collect usage statistics regarding a customer's use of subscribed services. For example, statistics may be collected for the amount of storage used, the amount of data transferred, the number of users, and the amount of system up time and system down time, and the like. This usage information may be used to bill the customer. Billing may be done, for example, on a monthly cycle.

Cloud infrastructure system 402 may provide services to multiple customers in parallel. Cloud infrastructure system 402 may store information for these customers, including possibly proprietary information. In certain implementations, cloud infrastructure system 402 comprises an identity management subsystem (IMS) 428 that is configured to manage customers information and provide the separation of the managed information such that information related to one customer is not accessible by another customer. IMS 428 may be configured to provide various security-related services such as identity services, such as information access management, authentication and authorization services, services for managing customer identities and roles and related capabilities, and the like.

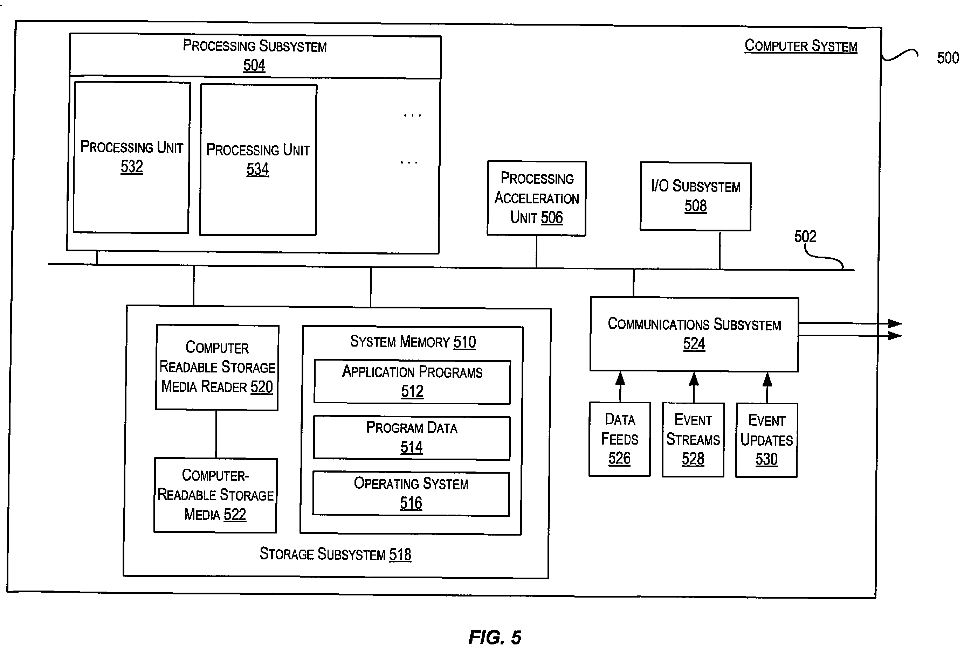

FIG. 5 is a block diagram of an example computer system 500 that may be used to implement certain examples. For example computer system 500 may be used to implement any of systems, subsystems, and components described herein. For example, data center 302 depicted in FIG. 3 may provide for multiple host machines that provide and implement the functionalities of wake-word recognition, including functionalities of the processing device 150. Computer systems such as computer system 500 may be used as host machines. As shown in FIG. 5, computer system 500 includes various subsystems including a processing subsystem 504 that communicates with a number of other subsystems via a bus subsystem 502. These other subsystems may include a processing acceleration unit 506, an I/O subsystem 508, a storage subsystem 518, and a communications subsystem 524. Storage subsystem 518 may include non-transitory computer-readable storage media including storage media 522 and a system memory 510.

Bus subsystem 502 provides a mechanism for letting the various components and subsystems of computer system 500 communicate with each other as intended. Although bus subsystem 502 is shown schematically as a single bus, alternative implementations of the bus subsystem may utilize multiple buses. Bus subsystem 502 may be any of several types of bus structures including a memory bus or memory controller, a peripheral bus, a local bus using any of a variety of bus architectures, and the like. For example, such architectures may include an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, which can be implemented as a Mezzanine bus manufactured to the IEEE P1386.1 standard, and the like.

Processing subsystem 504 controls the operation of computer system 500 and may comprise one or more processors, application specific integrated circuits (ASICs), or field programmable gate arrays (FPGAs). The processors may include be single core or multicore processors. The processing resources of computer system 500 can be organized into one or more processing units 532, 534, etc. A processing unit may include one or more processors, one or more cores from the same or different processors, a combination of cores and processors, or other combinations of cores and processors. In some implementations, processing subsystem 504 can include one or more special purpose co-processors such as graphics processors, digital signal processors (DSPs), or the like. In some example implementations, some or all of the processing units of processing subsystem 504 can be implemented using customized circuits, such as application specific integrated circuits (ASICs), or field programmable gate arrays (FPGAs).

In some example implementations, the processing units in processing subsystem 504 can execute instructions stored in system memory 510 or on computer readable storage media 522. In various example implementations, the processing units can execute a variety of programs or code instructions and can maintain multiple concurrently executing programs or processes. At any given time, some or all of the program code to be executed can be resident in system memory 510 and/or on computer-readable storage media 522 including potentially on one or more storage devices. Through suitable programming, processing subsystem 504 can provide various functionalities described above. In instances where computer system 500 is executing one or more virtual machines, one or more processing units may be allocated to each virtual machine.

In certain example implementations, a processing acceleration unit 506 may optionally be provided for performing customized processing or for off-loading some of the processing performed by processing subsystem 504 so as to accelerate the overall processing performed by computer system 500.

I/O subsystem 508 may include devices and mechanisms for inputting information to computer system 500 and/or for outputting information from or via computer system 500. In general, use of the term input device is intended to include all possible types of devices and mechanisms for inputting information to computer system 500. User interface input devices may include, for example, a keyboard, pointing devices such as a mouse or trackball, a touchpad or touch screen incorporated into a display, a scroll wheel, a click wheel, a dial, a button, a switch, a keypad, audio input devices with voice command recognition systems, microphones, and other types of input devices. User interface input devices may also include motion sensing and/or gesture recognition devices such as the Microsoft Kinect® motion sensor that enables users to control and interact with an input device, the Microsoft Xbox® 360 game controller, devices that provide an interface for receiving input using gestures and spoken commands. User interface input devices may also include eye gesture recognition devices such as the Google Glass® blink detector that detects eye activity (e.g., "blinking" while taking pictures and/or making a menu selection) from users and transforms the eye gestures as inputs to an input device (e.g., Google Glass®). Additionally, user interface input devices may include voice recognition sensing devices that enable users to interact with voice recognition systems (e.g., Siri® navigator) through voice commands.

Other examples of user interface input devices include, without limitation, three dimensional (3D) mice, joysticks or pointing sticks, gamepads and graphic tablets, and audio/visual devices such as speakers, digital cameras, digital camcorders, portable media players, webcams, image scanners, fingerprint scanners, barcode reader 3D scanners, 3D printers, laser rangefinders, and eye gaze tracking devices. Additionally, user interface input devices may include, for example, medical imaging input devices such as computed tomography, magnetic resonance imaging, position emission tomography, and medical ultrasonography devices. User interface input devices may also include, for example, audio input devices such as MIDI keyboards, digital musical instruments and the like.

In general, use of the term output device is intended to include all possible types of devices and mechanisms for outputting information from computer system 500 to a user or other computer. User interface output devices may include a display subsystem, indicator lights, or non-visual displays such as audio output devices, etc. The display subsystem may be a cathode ray tube (CRT), a flat-panel device, such as that using a liquid crystal display (LCD) or plasma display, a projection device, a touch screen, and the like. For example, user interface output devices may include, without limitation, a variety of display devices that visually convey text, graphics and audio/video information such as monitors, printers, speakers, headphones, automotive navigation systems, plotters, voice output devices, and modems.

Storage subsystem 518 provides a repository or data store for storing information and data that is used by computer system 500. Storage subsystem 518 provides a tangible non-transitory computer-readable storage medium for storing the basic programming and data constructs that provide the functionality of some of the example implementations. Storage subsystem 518 may store software (e.g., programs, code modules, instructions) that when executed by processing subsystem 504 provides the functionality described above. The software may be executed by one or more processing units of processing subsystem 504. Storage subsystem 518 may also provide a repository for storing data used in accordance with the teachings of this disclosure.

Storage subsystem 518 may include one or more non-transitory memory devices, including volatile and non-volatile memory devices. As shown in FIG. 5, storage subsystem 518 includes a system memory 510 and a computer-readable storage media 522. System memory 510 may include a number of memories including a volatile main random access memory (RAM) for storage of instructions and data during program execution and a non-volatile read only memory (ROM) or flash memory in which fixed instructions are stored. In some implementations, a basic input/output system (BIOS), containing the basic routines that help to transfer information between elements within computer system 500, such as during start-up, may typically be stored in the ROM. The RAM typically contains data and/or program modules that are presently being operated and executed by processing subsystem 504. In some implementations, system memory 510 may include multiple different types of memory, such as static random access memory (SRAM), dynamic random access memory (DRAM), and the like.

By way of example, and not limitation, as depicted in FIG. 5, system memory 510 may load application programs 512 that are being executed, which may include various applications such as Web browsers, mid-tier applications, relational database management systems (RDBMS), etc., program data 514, and an operating system 516. By way of example, operating system 516 may include various versions of Microsoft Windows®, Apple Macintosh®, and/or Linux operating systems, a variety of commercially-available UNIX® or UNIX-like operating systems (including without limitation the variety of GNU/Linux operating systems, the Google Chrome® OS, and the like) and/or mobile operating systems such as iOS, Windows® Phone, Android® OS, BlackBerry® OS, Palm® OS operating systems, and others.

In certain implementations, software instructions or code implementing recognition of wake-word candidates or filtering of such wake-word candidates to identify that a wake-word has been heard may be executed in system memory 510.

Computer-readable storage media 522 may store programming and data constructs that provide the functionality of some of the implementations. Computer-readable media 522 may provide storage of computer-readable instructions, data structures, program modules, and other data for computer system 500. Software (programs, code modules, instructions) that, when executed by processing subsystem 504 provides the functionality described above, may be stored in storage subsystem 518. By way of example, computer-readable storage media 522 may include non-volatile memory such as a hard disk drive, a magnetic disk drive, an optical disk drive such as a CD ROM, DVD, a Blu-Ray® disk, or other optical media. Computer-readable storage media 522 may include, but is not limited to, Zip® drives, flash memory cards, universal serial bus (USB) flash drives, secure digital (SD) cards, DVD disks, digital video tape, and the like. Computer-readable storage media 522 may also include, solid-state drives (SSD) based on non-volatile memory such as flash-memory based SSDs, enterprise flash drives, solid state ROM, and the like, SSDs based on volatile memory such as solid state RAM, dynamic RAM, static RAM, DRAM-based SSDs, magnetoresistive RAM (MRAM) SSDs, and hybrid SSDs that use a combination of DRAM and flash memory based SSDs.

In certain example implementations, storage subsystem 518 may also include a computer-readable storage media reader 520 that can further be connected to computer-readable storage media 522. Reader 520 may receive and be configured to read data from a memory device such as a disk, a flash drive, etc.

In certain example implementations, computer system 500 may support virtualization technologies, including but not limited to virtualization of processing and memory resources. For example, computer system 500 may provide support for executing one or more virtual machines. In certain example implementations, computer system 500 may execute a program such as a hypervisor that facilitated the configuring and managing of the virtual machines. Each virtual machine may be allocated memory, compute (e.g., processors, cores), I/O, and networking resources. Each virtual machine generally runs independently of the other virtual machines. A virtual machine typically runs its own operating system, which may be the same as or different from the operating systems executed by other virtual machines executed by computer system 500. Accordingly, multiple operating systems may potentially be run concurrently by computer system 500.

Communications subsystem 524 provides an interface to other computer systems and networks. Communications subsystem 524 serves as an interface for receiving data from and transmitting data to other systems from computer system 500. For example, communications subsystem 524 may enable computer system 500 to establish a communication channel to one or more client devices via the Internet for receiving and sending information from and to the client devices.

Communication subsystem 524 may support both wired and/or wireless communication protocols. For example, in certain embodiments, communications subsystem 524 may include radio frequency (RF) transceiver components for accessing wireless voice and/or data networks (e.g., using cellular telephone technology, advanced data network technology, such as 3G, 4G or EDGE (enhanced data rates for global evolution), WiFi (IEEE 802.XX family standards, or other mobile communication technologies, or any combination thereof), global positioning system (GPS) receiver components, and/or other components. In some example implementations communications subsystem 524 can provide wired network connectivity (e.g., Ethernet) in addition to or instead of a wireless interface.

Communication subsystem 524 can receive and transmit data in various forms. For example, in addition to other forms, communications subsystem 524 may receive input communications in the form of structured and/or unstructured data feeds 526, event streams 528, event updates 530, and the like. For example, communications subsystem 524 may be configured to receive (or send) data feeds 526 in real-time from users of social media networks and/or other communication services such as Twitter® feeds, Facebook® updates, web feeds such as Rich Site Summary (RSS) feeds, and/or real-time updates from one or more third party information sources.

In certain example implementations, communications subsystem 524 may be configured to receive data in the form of continuous data streams, which may include event streams 528 of real-time events and/or event updates 530, that may be continuous or unbounded in nature with no explicit end. Examples of applications that generate continuous data may include, for example, sensor data applications, financial tickers, network performance measuring tools (e.g. network monitoring and traffic management applications), clickstream analysis tools, automobile traffic monitoring, and the like.

Communications subsystem 524 may also be configured to communicate data from computer system 500 to other computer systems or networks. The data may be communicated in various different forms such as structured and/or unstructured data feeds 526, event streams 528, event updates 530, and the like to one or more databases that may be in communication with one or more streaming data source computers coupled to computer system 500.

Computer system 500 can be one of various types, including a handheld portable device (e.g., an iPhone® cellular phone, an iPad® computing tablet, a PDA), a wearable device (e.g., a Google Glass® head mounted display), a personal computer, a workstation, a mainframe, a kiosk, a server rack, or any other data processing system. Due to the ever-changing nature of computers and networks, the description of computer system 500 depicted in FIG. 5 is intended only as a specific example. Many other configurations having more or fewer components than the system depicted in FIG. 5 are possible.

Although specific implementations have been described, various modifications, alterations, alternative constructions, and equivalents are possible. The various example implementations are not restricted to operation within certain specific data processing environments, but are free to operate within a plurality of data processing environments. Although some flowcharts describe operations as a sequential process, many of the operations can be performed in parallel or concurrently. In addition, the order of the operations may be rearranged. A process may have additional steps not included in the figure.

Further, while certain example implementations have been described using a particular combination of hardware and software, it should be recognized that other combinations of hardware and software are also possible. Certain implementations may be implemented only in hardware, or only in software, or using combinations thereof. The various processes described herein can be implemented on the same processor or different processors in any combination.

Where devices, systems, components or modules are described as being configured to perform certain operations or functions, such configuration can be accomplished, for example, by designing electronic circuits to perform the operation, by programming programmable electronic circuits (such as microprocessors) to perform the operation such as by executing computer instructions or code, or processors or cores programmed to execute code or instructions stored on a non-transitory memory medium, or any combination thereof. Processes can communicate using a variety of techniques including but not limited to conventional techniques for inter-process communications, and different pairs of processes may use different techniques, or the same pair of processes may use different techniques at different times.

Specific details are given in this disclosure to provide a thorough understanding of the embodiments.

## Claims

1. A wake-word recognition method comprising:
receiving, at a processing device, an audio input recognized as a wake-word candidate based on a wake-word recognition model, wherein the audio input is detected at a listening device comprising the wake-word recognition model;
applying, to the audio input, ensemble classification utilizing the wake-word recognition model of the listening device and a filtering model resident on the processing device;
returning a second score of the audio input based on applying the ensemble classification to the audio input; and
determining, based on the second score, that the audio input comprises the wake-word.

## Patentansprüche

1. Verfahren zur Erkennung von Aufweckworten, das Folgendes umfasst:
Empfangen einer Audioeingabe an einer Verarbeitungsvorrichtung, die als ein Aufweckkandidat basierend auf einem Aufweckerkennungsmodell erkannt wurde, wobei die Audioeingabe an einer Hörvorrichtung erfasst wird, die das Aufweckerkennungsmodell umfasst;
Anwenden einer Ensembleklassifizierung auf die Audioeingabe unter Verwendung des Aufweckworterkennungsmodells der Hörvorrichtung und eines Filtermodells, das auf der Verarbeitungsvorrichtung resident ist;
Zurücksenden einer zweiten Bewertung der Audioeingabe basierend auf dem Anwenden der Ensembleklassifizierung auf die Audioeingabe; und
Bestimmen, basierend auf der zweiten Bewertung, dass die Audioeingabe das Aufweckwort umfasst.

## Revendications

1. Procédé de reconnaissance de mot de réveil comportant les étapes consistant à :
recevoir, au niveau d'un dispositif de traitement, une entrée audio reconnue comme étant un candidat de mot de réveil sur la base d'un modèle de reconnaissance de mot de réveil, dans lequel l'entrée audio est détectée au niveau d'un dispositif d'écoute comportant le modèle de reconnaissance de mot de réveil ;
appliquer, au niveau de l'entrée audio, une classification d'ensemble en utilisant le modèle de reconnaissance de mot de réveil du dispositif d'écoute et un modèle de filtration résidant sur le dispositif de traitement ;
renvoyer un deuxième score de l'entrée audio en se basant sur l'application de la classification d'ensemble sur l'entrée audio ; et
déterminer, en se basant sur le deuxième score, que l'entrée audio comprend le mot de réveil.
